# EUROPEAN PATENT SPECIFICATION

(11) **EP 3 904 761 B1**
(45) Date of publication and mention of the grant of the patent: **17.04.2024**
(21) Application number: 19923728.0
(22) Date of filing: 07.05.2019
(51) Int. Cl.: F21V 23/00, H01R 13/58, H02G 15/007, H05K 5/02

(54) **WIRING-FREE DRIVING DEVICE AND LAMP WIRING METHOD THEREFOR**
VERDRAHTUNGSFREIE ANTRIEBSVORRICHTUNG UND LAMPENVERDRAHTUNGSVERFAHREN DAFÜR
DISPOSITIF DE PILOTAGE SANS CÂBLAGE ET SON PROCÉDÉ DE CÂBLAGE DE LAMPE

(30) Priority: 06.05.2019 CN 201910371136
(43) Date of publication of application: 03.11.2021
(73) Proprietor: Shenzhen Angui Technology Go., Ltd, Shenzhen, Guangdong 518116 (CN)
(72) Inventor: FANG, Jifa, Shenzhen, Guangdong 518116 (CN)
(74) Representative: Zaboliene, Reda
(86) International application number: PCT/CN2019/085909
(87) International publication number: WO 2020/223912

(56) References cited:
- CN-A- 103 444 033
- CN-A- 104 184 086
- CN-A- 107 036 059
- CN-B- 105 337 117
- CN-B- 105 811 128
- CN-U- 202 993 133
- CN-U- 202 993 133
- CN-U- 203 521 657
- CN-U- 204 285 350
- CN-U- 204 333 837
- CN-U- 205 079 196
- CN-U- 207 049 852
- CN-U- 208 237 824
- CN-Y- 2 888 613
- JP-A- 2016 213 168

## Description

### Technical Field

The present invention relates to the field of electrical appliance connecting piece technologies, and more particularly, to a wiring-free driving device and a lamp wiring method thereof.

### Background Art

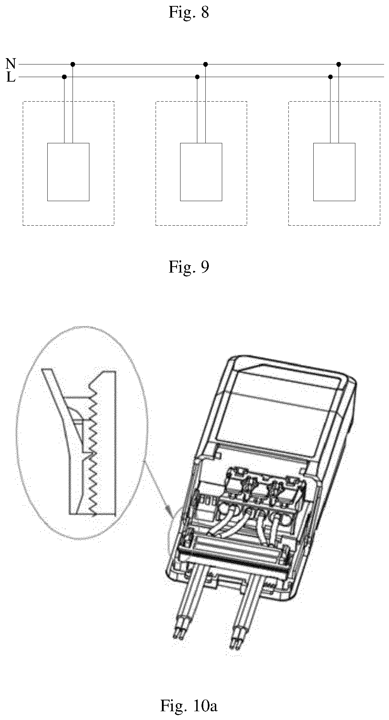

In a market terminal of electrical installation, according to basic requirements of connection and wiring, when connecting and wiring lamps and the like, an electrician needs to complete installation on a main wire of an alternating-current power supply (which is namely a neutral wire and a live wire introduced into a household) by single lamp branching. Fig. 9 shows a traditional lamp parallel-wiring method. A power drive of each lamp needs to be connected to the main wire separately.

The inventor finds that the related arts have the following problems in a process of realizing the present invention: an existing lamp connecting and wiring method is complex, and needs to consume a lot of time of the electrician and wiring materials, and the power drive of the lamp needs to be connected with the main wire during wiring each time, thus having a high cost and a limited installation and wiring efficiency.

Document CN 105337117 A discloses a connector and particularly relates to a wiring terminal. The wiring terminal comprises a wiring seat and a male plug which is arranged on a PCB (Printed Circuit Board) of a driver of a lamp, wherein the wiring seat is provided with a female jack adapted to the male plug; the female jack is internally provided with an elastic conductive sheet and the elastic conductive sheet is a copper sheet; the wiring seat is further provided with a wiring hole for accessing to a power line; the wiring hole is electrically connected with the female jack; a clamping device is arranged at the bottom of the wiring hole; the clamping device comprises a clamping wrench; and the clamping wrench is provided with an elastic clamping part for tightly clamping the power line. The wiring terminal has the beneficial effects that the wiring terminal provided by the invention is convenient and rapid to mount; and the lamp does not need to be lifted by a hand in a wiring process, so that the consumption of physical power is alleviated, and the installation efficiency is improved.

Document CN 104184086 A disclose a junction box comprising a box body, a box cover, and at least two locking elements. The box body comprises a bottom wall and a first side wall disposed on the bottom wall. The box cover comprises a cover body, a second side wall, and two third side walls. The second side wall and the third side walls of the box cover are downwardly extended from the cover body and each third side wall comprises a locking opening. The box cover comprises an open state position and a closed state position and may cover the box body in an openable manner. The locking elements are disposed between the box body and the box cover and may lock the box cover of the junction box to the box body. Each locking element comprises a maintaining member upwardly extended from the first side wall of the box body and at least one locking member disposed on the maintaining member. When the box cover is in the closed state position, the locking members of the locking elements enable the locking openings of the third side walls of the box cover to be meshed and maintain the box cover to cover the box body.

Document CN 202993133 U discloses a light-emitting diode (LED) driving power supply case which comprises a face case, a bottom case, an input end dust cap, and an output end dust cap. A containing cavity for containing a power panel is formed in the bottom case, the face case covers the bottom case, hollow structures for exposing two ends of the power panel are formed in two ends of the face case, the input end dust cap and the output end dust cap are respectively mounted on a left portion and a right portion of the bottom case and cover the hollow structures at two ends of the face case, an input end groove for containing a power input line is formed on the side of the input end dust cap, and an output end groove for containing a power output line is formed on the side face of the output end dust cap. The LED driving power supply case is a composite structure composed of the face case, the bottom case and two dust caps and can be assembled and disassembled conveniently, panels with printed circuit board (PCB) connecting terminals and panels with traditional lines or tail cards can be mounted on the LED driving power supply case, market requirements are met, and manufacture cost of the whole industry is saved.

Document CN 107036059 A provides a kind of LED power shell, including lower cover and upper lid, upper lid encloses the accommodating chamber to be formed and accommodate power supply with lower cover, and the lower surface of lower cover is provided with the leg of protrusion, the first passage is provided with lower lid, the upper lid top surface relative with lower cover is provided with the second passage. LED power shell of the present invention sets leg in the bottom of lower cover, lower cover frame is high, the bottom of lower cover is set to leave space, and relative the first passage and the second passage is set on lower cover and upper lid, make LED power enclosure formation cross-ventilation, the radiating effect of LED power is improved, the service life of power supply is extended.

Document CN 204285350 U provides a kind of power supply shell, relates to a kind of power supply unit of lighting device, in order to solve prior art because need establishing screw hole thus causing the problem that the manufacturing cost of power supply shell is high, install complexity. The first cavity that this power supply shell comprises top cover, side cover, top cover are provided with, top cover comprises top cover leading section, top cover rearward end; Described side cover is located at above top cover leading section, and is provided with installing hole thereon; Described top cover leading section is provided with column, and column can pass installing hole, and side cover is fixedly connected with top cover; Described side cover is provided with a pair installing hole, and on described top cover leading section, correspondence establishes pair of columnar body; Described column includes cylinder, and cylinder is provided with clamp. Cylinder is provided with the pilot hole of lead through detachable top cover of multiple protrusion, and housing forward end and detachable top cover form buckle and be connected, and exempts from screw and installs, and is easy to installation and removal maintenance.

Document CN 2888613 Y discloses a fastening structure for transformer wire. A groove for fixing the wire is arranged on transformer enclosure side, a gland is arranged on the groove for gripping the wire, matched clamping structures are arranged on the groove and the gland respectively. Since the utility model adopts clamping mode for fastening the wire, so no tool is required, thus realizing the easy installation and convenient disassembly.

Document CN 208237824 U provides a driving box and down lamp relates to driving box technical field. This driving box includes upper cover, base, wire pressing cover and line pressing buckle. The one end of base is equipped with wire pressing cover, and the one end of upper cover is rotated with wire pressing cover and is connected, and the other end and the base detachably of upper cover are connected. The other end of base is equipped with barb teeth, and line pressing buckle and barb teeth are connected, can remove along barb teeth. This driving box is convenient for install and remove, and faultfinding is swiftly convenient, and the packaging efficiency is high, and the practicality is strong. The utility model provides a down lamp, including foretell driving box, the user of being convenient for opens driving box fast and overhauls, and user experience feels.

Document CN 105811128 B relates to a kind of power supply architectures. The power supply architecture includes: Putting part has opening, Screwless connection terminal, one end are placed in putting part, and the other end exposes in opening, Cover board is located at outside putting part, and there is cover board the first end being rotatably connected with putting part and opposite second end, second end can be detachably connected with putting part, wherein, when cover board is towards when opening rotation, at least partly covering is open, and so that second end is cooperatively formed line mouth with putting part, the wiring hole of screwless connection terminal exposes at line mouth. Input/output line is connect in screwless connection terminal, there need not be the process to screw. After connecting input/output line in screwless connection terminal so that cover board covering opening, connecting input/output line can draw from line mouth, then so that second end is connect with putting part, so that input/output line is fixed, need not there are the process to screw, very convenient user's assembling.

Aiming at the problems shown by the prior art documents, the present disclosure provides a novel casing structure of an electronic device, and a novel method and novel technical means are adopted to solve the problems.

### Summary of the Invention

Aiming at the above technical problems, the embodiments of the present invention provide a wiring-free driving device and a lamp wiring method thereof, so that existing problems of a complex connecting and wiring method, a high cost and a low installation and wiring efficiency are solved.

The first aspect of the embodiments of the present invention provides a wiring-free driving device. The wiring-free driving device comprises:
a shell, one end of the shell extending to form a bottom cover; a driving circuit, the driving circuit being arranged inside the shell; a connection terminal, the connection terminal comprising an input terminal and an output terminal, being fixedly arranged on the shell, and being electrically connected with the driving circuit; a top cover, the top cover being movably connected with one end of the shell and being covered with the bottom cover to cover the connection terminal; a fixing device, the fixing device being arranged on the top cover and the bottom cover and being used for fixing the top cover onto the bottom cover when the top cover and the bottom cover are covered; and a plurality of notches for threading, the plurality of notches for threading being used for a wire connected with the connection terminal to penetrate through when the top cover and the bottom cover are covered.

According to the invention, the top cover is hinged with the shell, and the top cover is able to be turned over relative to the shell; and a baffle is arranged between different notches for threading.

In a non-claimed embodiment, the fixing device comprises: a positioning column, the positioning column being arranged on the bottom cover, and an inner wall of the positioning column being provided with a thread; and a screw positioning hole, the screw positioning hole being arranged in a surface of the top cover at a position corresponding to the positioning column.

In a non-claimed embodiment, the fixing device comprises: a supporting column, the supporting column being formed by extending upwardly from the bottom cover, and a surface of the supporting column being provided with a plurality of inclined-plane clamping bulges; and a clamping opening, the clamping opening being arranged in a surface of the top cover, and being matched with the inclined-plane clamping bulge to limit a turning-over angle of the top cover.

In a non-claimed embodiment, two supporting columns are provided, and are respectively arranged at two sides of the bottom cover; and three inclined-plane clamping bulges are provided, are distributed on the supporting columns at different heights, and are matched with the clamping openings to form three gears with different turning-over angles of the top cover.

In a non-claimed embodiment, the wiring-free driving device further comprises: a lower toothed plate, the lower toothed plate being arranged on the bottom cover at a position opposite to the notches for threading; and an upper toothed plate, the upper toothed plate being arranged on the top cover at a position opposite to the lower toothed plate; wherein the upper toothed plate is engaged with the lower toothed plate to fix the wire penetrating through the notches for threading when the top cover and the bottom cover are covered.

Optionally, the fixing device comprises: a male fastener, the male fastener being formed by extending from one end of the top cover; and a female fastener, the female fastener being arranged at a tail end of the bottom cover at a position corresponding to the male fastener.

According to the invention, the wiring-free driving device further comprises: a bayonet pedestal, the bayonet pedestal being fixedly arranged on the bottom cover, and comprising side walls extending upwardly at two sides, outside surfaces of the side walls being tooth-shaped surfaces, and a lower toothed plate being arranged between the side walls; a bayonet cover body, the bayonet cover body being covered above the bayonet pedestal, and being able to move up and down along the side walls; wherein the bayonet cover body comprises an upper toothed plate arranged opposite to the lower toothed plate and a male fastener; and the male fastener is matched with the tooth-shaped surfaces, and a distance between the bayonet cover body and the bayonet pedestal is adjusted step by step.

According to the invention, the shell comprises a connecting portion and a driving portion; the driving circuit is fixedly arranged inside the driving portion, and the connection terminal is arranged on the connecting portion; and the connecting portion and the driving portion are in fastener connection through a plug-in terminal.

The second aspect of the embodiments of the present invention provides a lamp wiring method using the above wiring-free driving device. The method comprises: connecting a live wire and a neutral wire of an alternating-current power supply to one input terminal of the wiring-free driving device through a connecting wire, and connecting an output terminal of the wiring-free driving device connected with the live wire and the neutral wire to another input terminal of the wiring-free driving device.

The technical solutions provided by the embodiments of the present invention provide the wiring-free driving device having an alternating-current wiring terminal interconnection design, so that a problem of lamp wiring is effectively solved, a construction and installation difficulty is lowered, and a working efficiency is improved.

Further, the driving device and a junction box are designed integrally, so that quick junction between the driving device and the junction box is realized, thus improving a lamp installation and wiring efficiency and reducing a construction cost.

### Brief Description of the Drawings

Fig. 1a and Fig. 1b are diagrams of a non-claimed embodiment that a wiring-free driving device is in an opened state;
Fig. 2a and Fig. 2b are diagrams of an embodiment that the wiring-free driving device according to the embodiment of the present invention is in a covered state;
Fig. 3a, Fig. 3a-1, Fig. 3b and Fig. 3b-1 are diagrams of an embodiment of a connection terminal of the wiring-free driving device according to the embodiment of the present invention;
Fig. 4a and Fig. 4b are diagrams of an embodiment that a wiring-free driving device according to the embodiment of the present invention is in an opened state;
Fig. 5a and Fig. 5b are diagrams of an embodiment that the wiring-free driving device according to the embodiment of the present invention is in a covered state;
Fig. 6a and Fig. 6b are diagrams of an embodiment that a wiring-free driving device according to the Embodiment 3 of the present invention is in a separated state;
Fig. 7a and Fig. 7b are diagrams of an embodiment that the wiring-free driving device according to the Embodiment 3 of the present invention is in a combined state;
Fig. 8 is a diagram of an embodiment of a lamp wiring method according to the Embodiment 4 of the present invention;
Fig. 9 is a diagram of an embodiment of a traditional lamp wiring method;
Fig. 10a, Fig. 11a and Fig. 12a are diagrams of an embodiment that the wiring-free driving device according to the embodiment of the present invention is combined with the connection terminal shown in Fig. 3 a for use;
Fig. 10b, Fig. 11b and Fig. 12b are diagrams of an embodiment that the wiring-free driving device according to the embodiment of the present invention is combined with the connection terminal shown in Fig. 3b for use;
Fig. 13a, Fig. 14a and Fig. 15a are diagrams of a non-claimed embodiment that a wiring-free driving device according to another embodiment of the present invention is combined with the connection terminal shown in Fig. 3a for use;
Fig. 13b, Fig. 14b and Fig. 15b are diagrams of a non-claimed embodiment that the wiring-free driving device according to another embodiment of the present invention is combined with the connection terminal shown in Fig. 3b for use;
Fig. 16a, Fig. 17a and Fig. 18a are diagrams of a non-claimed embodiment that a wiring-free driving device according to yet another embodiment of the present invention is combined with the connection terminal shown in Fig. 3a for use;
Fig. 16b, Fig. 17b and Fig. 18b are diagrams of a non-claimed embodiment that the wiring-free driving device according to yet another embodiment of the present invention is combined with the connection terminal shown in Fig. 3b for use;
Fig. 19 is a diagram of an embodiment of a traditional driving power supply combination; and
Fig. 20 is a diagram of an embodiment of the wiring-free driving device according to the embodiment of the present invention.

### Detailed Description of the Preferred Embodiments

The technical solutions in the embodiments of the present invention are clearly and completely described with reference to the accompanying drawings in the embodiments of the present invention.

It should be noted that when the element is described to be "fixed to" another element, it may be directly on another element, or there may be one or more intermediate elements in between. When one element is described to be "connected to" another element, it may be directly connected to another element, or there may be one or more intermediate elements therebetween. The orientation or position relationship indicated by the terms "vertical", "horizontal", "left", "right", "up", "down", "inside", "outside", "bottom" and the like is based on the orientation or position relationship shown in the accompanying drawings, it is only for the convenience of description of the utility model and simplification of the description, and it is not to indicate or imply that the indicated device or element must have a specific orientation, and be constructed and operated in a specific orientation. Therefore, the terms should not be understood as limiting the utility model. Moreover, the terms "first", "second" and the like if any are used for descriptive purposes only and cannot be understood as indicating or implying relative importance.

Unless otherwise defined, all technical and scientific terms used in the description have the same meanings as those commonly understood by those skilled in the technical field of the present invention. The terms used in the description of the present invention are only for the purpose of describing specific embodiments, and are not used to limit the utility model. The term "and/or" used in the description includes any and all combinations of one or more associated listed items. In addition, the technical features involved in different embodiments of the utility model described hereinafter may be combined with each other as long as they do not conflict with each other.

If an electrician uses a traditional power supply in a process of installing lamps in batches, the electrician needs to connect a driving power supply by performing single lamp branching one by one from a wire, which may waste a lot of materials and time. Therefore, in the present application, quick series connection of AC ends among multiple power supplies is realized by an AC terminal on the power supply, thus eliminating a wiring process, reducing a material cost and improving a working efficiency.

In the present application, a traditional power supply and a junction box are integrated into a whole in combination with the traditional driving power supply + the junction box + a DC wire, so that construction and installation are realized quickly, a man-machine effect is more scientific, and a product design is more beautiful. Different from a traditional driving wiring installation method, an adhesive tape and a screw are eliminated in a whole process, and installation is convenient and fast, thus reducing a material cost and improving a working efficiency. Specific contents are as follows.

### Embodiment 1 (not claimed):

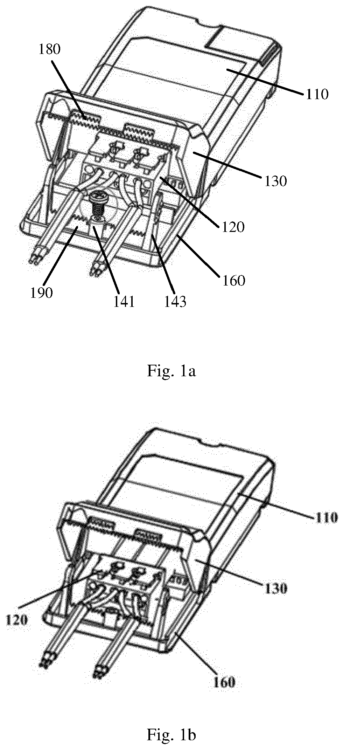

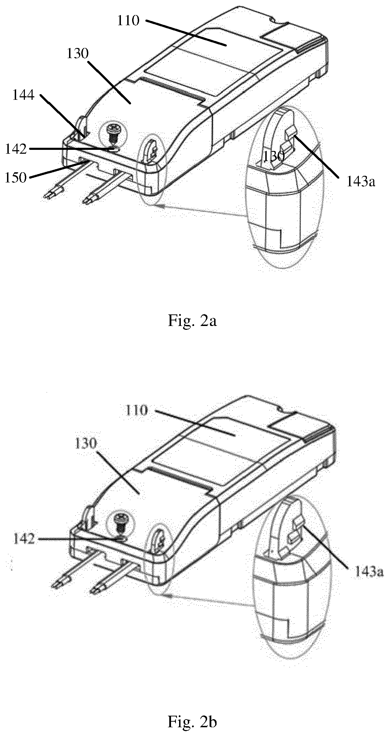

Fig. 1a and Fig. 2a are structure diagrams of a wiring-free driving device provided by a non-claimed embodiment, wherein Fig. 1a is a diagram that a top cover of the wiring-free driving device is in an opened state, and Fig. 2 is a diagram that the top cover of the wiring-free driving device is in a covered state.

As shown in Fig. 1a and the Fig. 2a, the wiring-free driving device comprises: a shell 110, a driving circuit (not shown in the drawings), a connection terminal 120, a top cover 130, a fixing device 140 and a plurality of notches for threading 150.

The shell 110 forms a main structure of the wiring-free driving device, and a corresponding accommodating space is formed inside the shell to accommodate one or more circuit structures, which may play a role in covering and protecting the circuit structures accommodated inside the shell. The driving circuit for driving a lamp to emit light may be fixedly arranged inside the shell 110.

As shown in Fig. 1a, one end of the shell 110 extends to form a bottom cover 160. A top cover 130 matched with the bottom cover 160 is movably connected with one end of the shell 110, and may move relative to the shell 110, so as to have two different use states that the top cover is covered with the bottom cover 160 and the top cover is opened to reveal the connection terminal 120 fixedly arranged on the shell 110.

Specifically, the top cover 130 may be connected with the shell 110 by any suitable type of movable connection method. In some embodiments, as shown in Fig. 1a and Fig. 2a, the top cover 130 may be hinged with the shell 110 through a rotating shaft, so that the top cover 130 may be turned over relative to the shell 110. In this way, when the top cover 130 is turned over upwardly, the wiring-free driving device is in an opened state. When the top cover 130 is turned over downwardly, the top cover and the bottom cover may be covered.

The fixing device 140 is a fixing structure arranged on the top cover and the bottom cover and used for fixing the top cover onto the bottom cover when the top cover and the bottom cover are covered. In some embodiments, as shown in Fig. 1 and Fig. 2, the fixing device 140 may be a structural device in a form of screw fixation. The fixing device may comprise: a positioning column 141 and a screw positioning hole 142.

The positioning column 141 is arranged on the bottom cover, and an inner wall of the positioning column is provided with a thread. The screw positioning hole 142 is arranged in a surface of the top cover at a position corresponding to the positioning column. After the top cover and the bottom cover are covered, a positioning screw penetrates through the screw positioning hole 142, and is fixed on the positioning column 141 in a screwed manner, thus realizing fixed connection between the top cover and the bottom cover.

A wire may be fixed by enough tension through screw positioning, thus ensuring a safety of wire connection.

In some embodiments, in order to further strengthen a pulling force to ensure fixation of the wire, as shown in Fig. 1a, the wiring-free driving device may further comprise: a lower toothed plate 180 and an upper toothed plate 190.

The lower toothed plate 180 is arranged on the bottom cover at a position opposite to the notches for threading. The upper toothed plate 190 is arranged on the top cover at a position opposite to the lower toothed plate. The upper toothed plate 190 is engaged with the lower toothed plate 180 to fix the wire penetrating through the notches for threading when the top cover and the bottom cover are covered, so that the pulling force on the wire is strengthened, thus ensuring a connection safety.

Specifically, the connection terminal 120 comprises an input terminal and an output terminal, and a corresponding connecting wire is further electrically connected with the driving circuit (arranged on a PCB board) by connecting with the connection terminal, thus realizing parallel connection of different lamps.

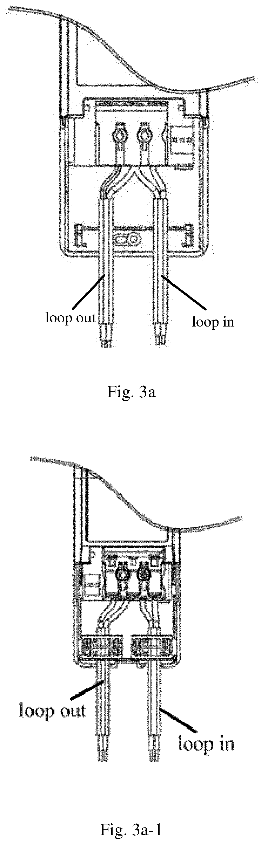

In some embodiments, two sets of input terminals and output terminals may be provided respectively for connecting with a live wire and a neutral wire. Fig. 3a is a wiring diagram of the connection terminal of the wiring-free driving device provided by the embodiment of the present invention. As shown in Fig. 3a, the connection terminal comprises an input terminal (loop in) and an output terminal (loop out). The input terminal and the output terminal are communicated with each other, thus realizing parallel connection of different lamps.

The plurality of notches for threading 150 are notches formed when the top cover and the bottom cover are covered and used for a wire connected with the connection terminal to penetrate through. In some embodiments, as shown in Fig. 1a and Fig. 2a, the notches for threading may be composed of gaps arranged on the top cover and the bottom cover. A specific size of the notches, such as a length or a width, may be adjusted or set by those skilled in the art according to requirements of an actual situation, and is an experience value.

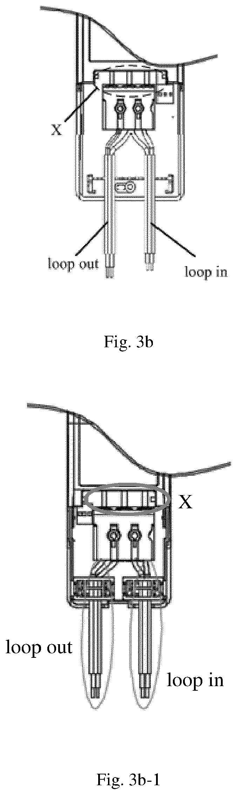

Preferably, as shown in Fig. 3, a baffle arranged between different notches for threading, and connecting wires of the input terminal and the output terminal respectively penetrate through different notches for threading, thus ensuring reliable separation between input and output.

In other embodiments, as shown in Fig. 1b, Fig. 2b and Fig. 3b, electrical connection between the connection terminal and the PCB board may be realized by the wire (shown by an X portion of a dashed box). Certainly, according to requirements of an actual situation, any other suitable electrical connection method may also be selected, which is not limited to a connection method between the connection terminal and the PCB board shown in Fig. 3 or Fig. 3b.

In a preferred embodiment, in order to meet different wire types, as shown in Fig. 1a and Fig. 2a, the fixing device 140 may further comprise a supporting column 143 and a clamping opening 144.

The supporting column 143 is formed by extending upwardly from the bottom cover. A plurality of inclined-plane clamping bulges 143a are arranged on an outside surface of the supporting column 143. The clamping opening 144 is arranged in a surface of the top cover, and is matched with the inclined-plane clamping bulge to limit a turning-over angle of the top cover 130.

Specifically, as shown in Fig. 1a and Fig. 2a, according to a shape of the bottom cover, two supporting columns 143 are provided, and are respectively arranged at two sides of the bottom cover.

Three inclined-plane clamping bulges 143a are provided, and are distributed on the supporting columns at different heights in sequence. Clamping bayonets 144 may be clamped on the inclined-plane clamping bulges 143a at different heights during use, and are matched with the clamping openings 144 to form three gears with different turning-over angles of the top cover.

A plurality of stepping gears may be formed through setting of the inclined-plane clamping bulges and the clamping openings, thus meeting use requirements of wires with different diameters and widths, having a good adaptability, and being convenient for on-site construction wiring personnel to install.

### Embodiment 2:

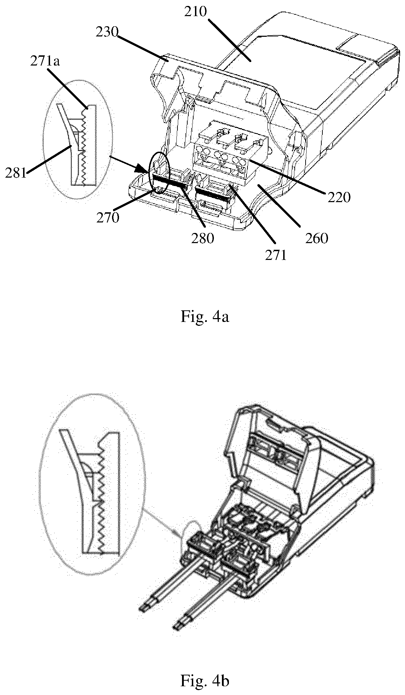

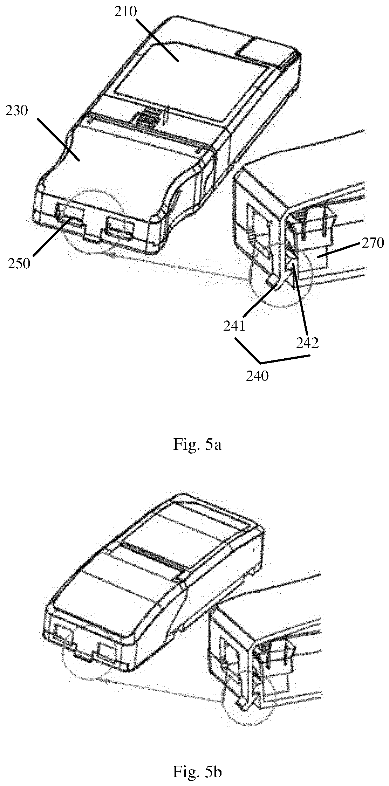

Fig. 4 and Fig. 5 are structure diagrams of a wiring-free driving device provided by another embodiment of the present invention, wherein Fig. 4 is a diagram that a top cover of the wiring-free driving device is in an opened state, and Fig. 5 is a diagram that the top cover of the wiring-free driving device is in a covered state.

As shown in Fig. 4 and the Fig. 5, the wiring-free driving device may also comprise: a shell 210, a driving circuit (not shown in the drawings), a connection terminal 220, a top cover 230, a fixing device 240 and a plurality of notches for threading 250.

The shell 210 forms a main structure of the wiring-free driving device, and a corresponding accommodating space is formed inside the shell to accommodate one or more circuit structures, which may play a role in covering and protecting the circuit structures accommodated inside the shell (such as the driving circuit for driving a lamp to emit light).

A bottom cover 260 is formed by extension of one end of the shell 210, and the top cover 230 matched with the bottom cover 260 is hinged with one end of the shell 210, and may be turned over relative to the shell 210 to form an opened state that the top cover is separated from the bottom cover 260 as shown in Fig. 4 and a covered state that the top cover is covered with the bottom cover 260 as shown in Fig. 5.

In the embodiment, when the top cover 230 and the bottom cover 260 are in a covered state, the top cover and the bottom cover may be fixed in fastener connection. As shown in Fig. 4, the fixing device 240 may comprise: a male fastener 241 and a female fastener 242.

The male fastener 241 is formed by extending from one end of the top cover, and has a suitable elastic deformation capability. The female fastener 242 is arranged at a tail end of the bottom cover at a position corresponding to the male fastener. The male fastener is fastened with the female fastener to fix the top cover and the bottom cover in the covered state.

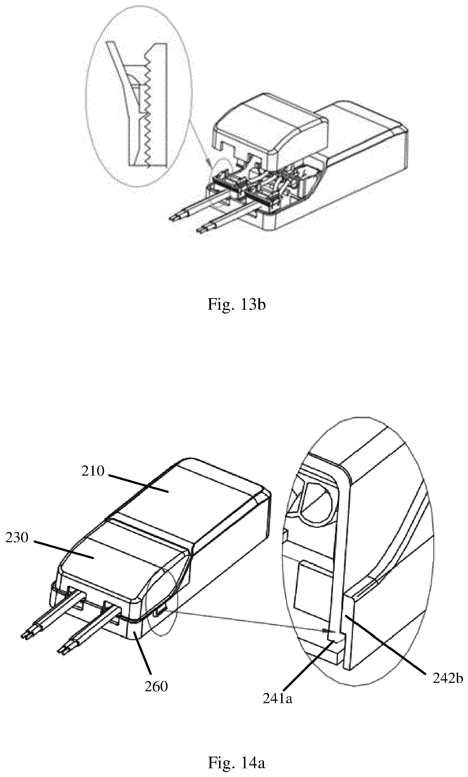

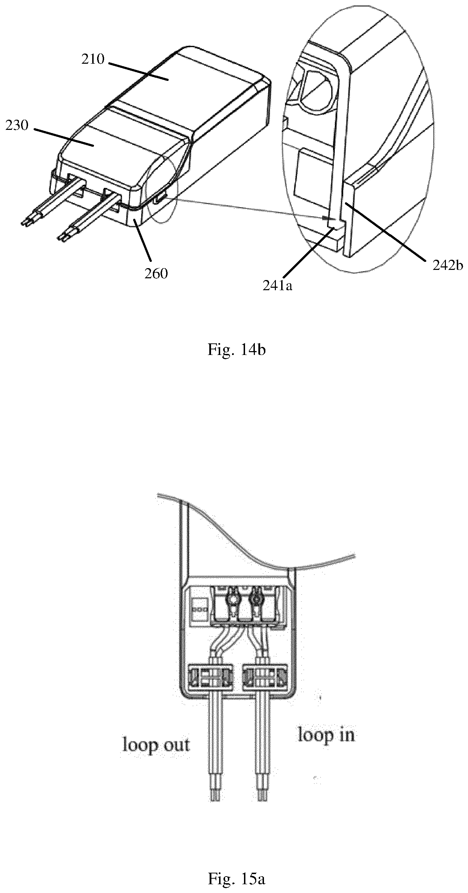

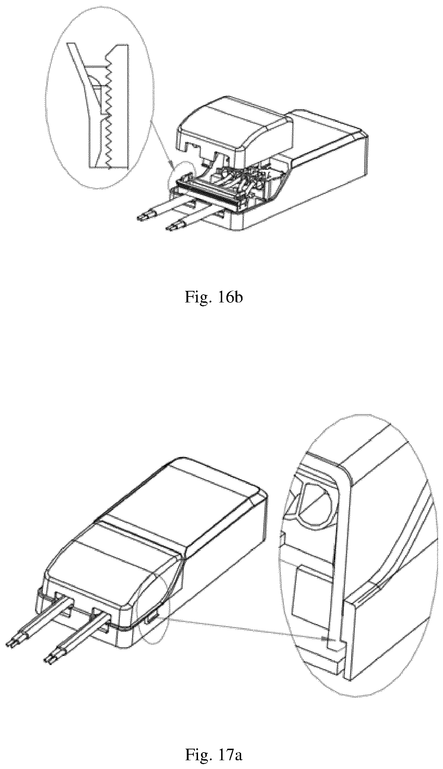

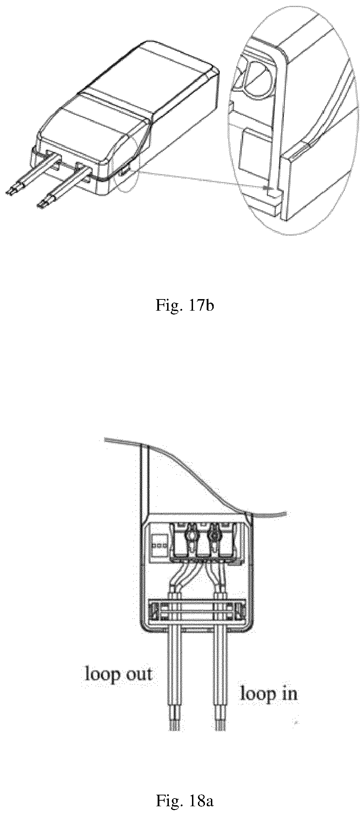

In other non-claimed embodiments, a side cover pressing structure as shown in Fig. 14 and Fig. 17 may also be used for bayonet connection for fixing the top cover 230 and the bottom cover 260.

As shown in Fig. 14 and Fig. 17, the fixing device comprises: a male fastener 241a and a female fastener 242b. The male fastener 241a is arranged on a side edge of the top cover 230 and is an outward bulge. The female fastener 242b is arranged on a side wall of the bottom cover 260 at a position corresponding to the male fastener. The female fastener 242b is a step surface matched with the outward bulge.

An adjacent area of the male fastener 241a on the side wall of the top cover 230 has the elastic deformation capability. When the top cover and the bottom cover need to be covered, the male fastener and the female fastener may be fastened by pressing the top cover to fix the top cover and the bottom cover.

In some embodiments, a wire fixing structure shown in Fig. 4 may also be arranged at the notches for threading to increase a pulling force on the wire and keep fixation of the wire, thus ensuring a connection safety. As shown in Fig. 4, the wire fixing structure comprises: a bayonet pedestal 270 and a bayonet cover body 280.

The bayonet pedestal 270 is fixedly arranged on the bottom cover 280, and comprises side walls 271 extending upwardly at two sides.

Outside surfaces of the side walls 271 are tooth-shaped surfaces 271a, and a lower toothed plate is arranged between the side walls. The bayonet cover body 280 is covered above the bayonet pedestal, has a guide hole matched with the side walls, and is able to move up and down along the side walls under guiding of the side walls. The bayonet cover body 280 further comprises an upper toothed plate arranged opposite to the lower toothed plate and a male fastener 281.

The male fastener 281 is matched with the tooth-shaped surfaces 271a and clamped on teeth at different heights during use, thus adjusting a distance between the bayonet cover body and the bayonet pedestal step by step. The wire is fixed through the engagement between the upper toothed plate and the lower toothed plate arranged on the bayonet cover body and the bayonet pedestal.

The bayonet design may satisfy selection of any wire in an actual construction wiring process, and has a good applicability. Meanwhile, the bayonet design may also facilitate installation by on-site construction personnel, and has a good use effect.

### Embodiment 3:

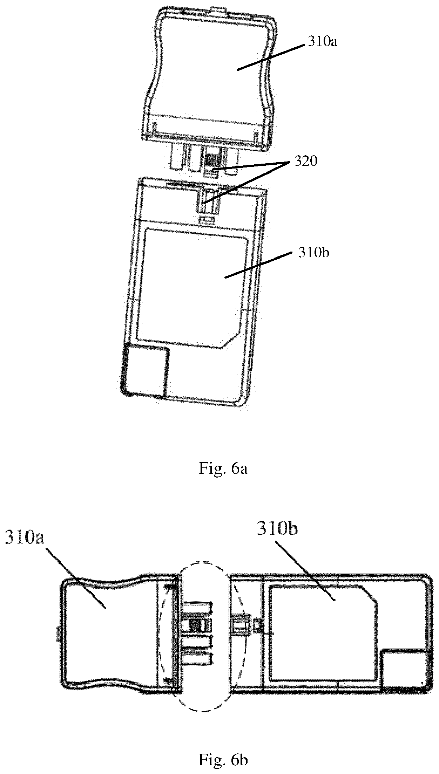

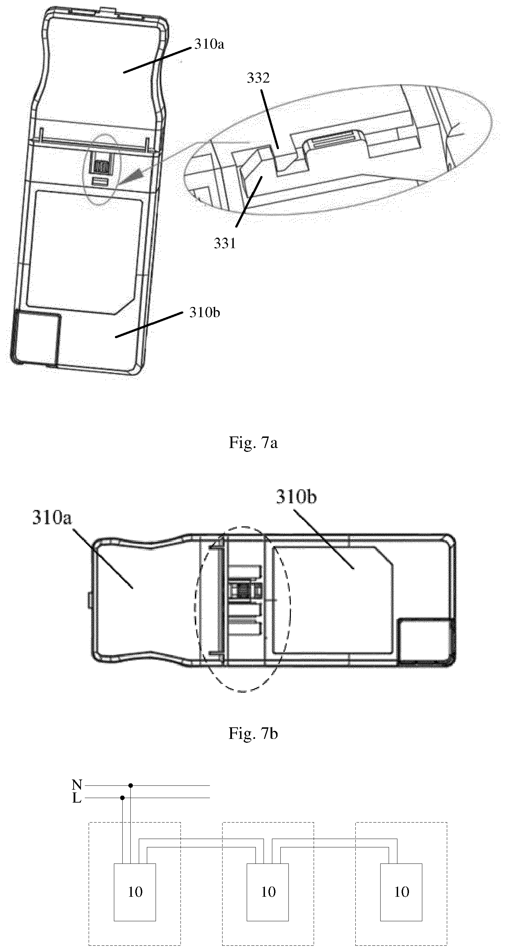

Fig. 6 (comprising Fig. 6a to Fig. 6c) and Fig. 7 are structure diagrams of a wiring-free driving device provided by yet another embodiment of the present invention. As shown in Fig. 6 and Fig. 7, a shell 310 may comprise relatively independent connecting portion 310a and driving portion 310b.

A driving circuit is fixedly arranged in the driving portion 310b and is a power supply driving assembly of a lamp. The connecting portion 310a is a junction box assembly provided with a connection terminal.

In a traditional construction wiring process, construction personnel need to connect the power supply driving assembly with the junction box assembly with an extra connecting wire, thus having a low overall working efficiency and a high difficulty.

As shown in Fig. 6 and Fig. 7, in the embodiment, the connecting portion 310a and the driving portion 310b are in fastener connection through a plug-in terminal 320, so as to realize electrical connection between the connecting portion and the driving portion.

Specifically, as shown in Fig. 7, the connecting portion 310a and the driving portion 310b may be respectively provided with corresponding male fastener 331 and female fastener 332, so as to realize detachable connection between the connecting portion and the driving portion.

The embodiment of the present invention provides a plug-in fastener connection method, which connects the power supply driving assembly simply and reliably, and eliminates an extra junction box design, thus effectively simplifying wiring operation of the construction personnel, improving a working efficiency well, and reducing a wiring cost.

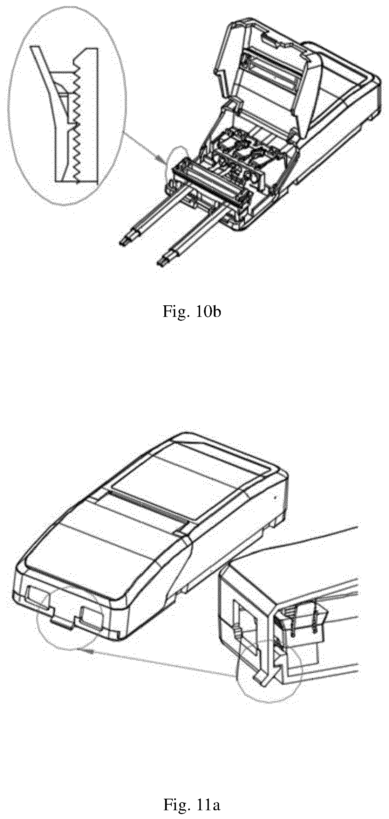

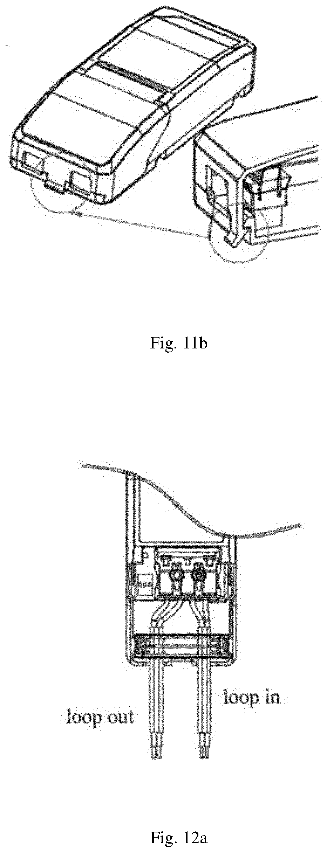

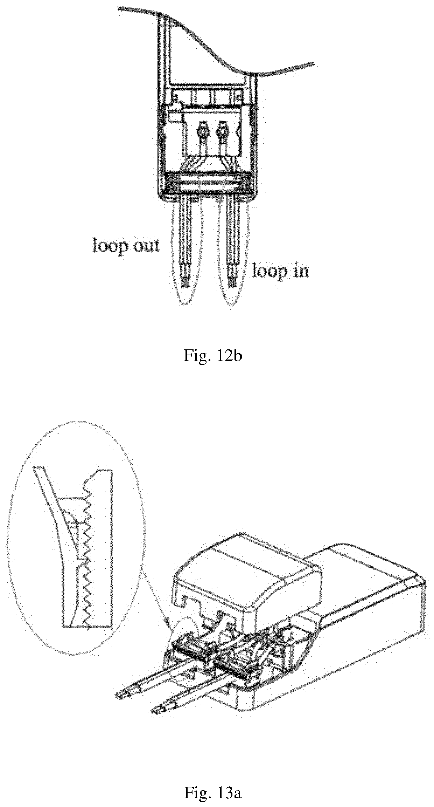

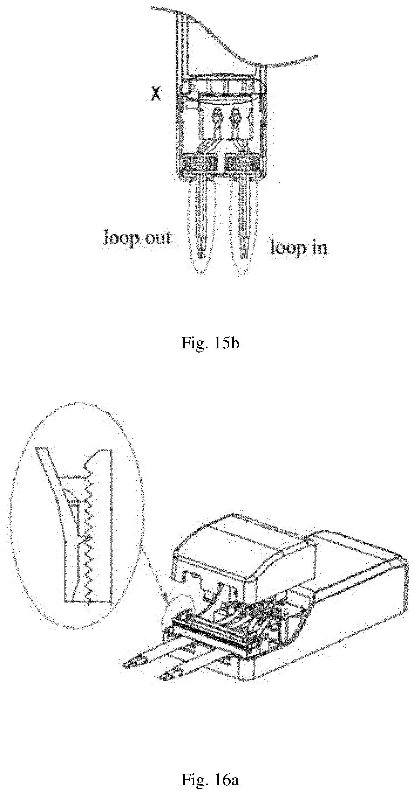

It should be noted that various parts in the above embodiment may be combined at will without mutual exclusion to obtain more different embodiments, such as various embodiments shown in Fig. 10 to Fig. 18

### Embodiment 4:

Fig. 8 is a diagram of a lamp wiring method using the above wiring-free driving device provided by the embodiment of the present invention. Parallel connection of a plurality of lamps may be realized by utilizing interconnection among a plurality of wiring-free driving devices provided by the embodiment of the present invention.

As shown in Fig. 8, a live wire (L) and a neutral wire (N) of an alternating-current power supply are connected to one input terminal of the wiring-free driving device 10 through a connecting wire first. An output terminal of the wiring-free driving device connected with the live wire and the neutral wire is connected to another input terminal of the wiring-free driving device. Other wiring-free driving devices are interconnected in sequence.

Due to intercommunication of alternating-current ends among these wiring-free driving devices, the parallel connection of the lamps may be realized, and the lamps only need to be connected to an output end of a power supply driving circuit of each wiring-free drive device.

Compared with a traditional wiring method shown in Fig. 9, in the wiring method shown in Fig. 8, an AC wire does not need to be wired for a power supply, which can reduce line interfaces, is safer, and is convenient for installation. Although only three different wiring-free driving devices are shown in Fig. 8, those skilled in the art may understand that more or fewer wiring-free driving devices may be provided according to requirements of an actual situation.

Wiring may be completed by two sets of connection terminals (L1, L2 and N1, N2) provided by the wiring-free driving device. Moreover, when the line or the power supply fails, the power supply or the connecting wire may be directly switched, thus being convenient for maintenance, without needing other operations.

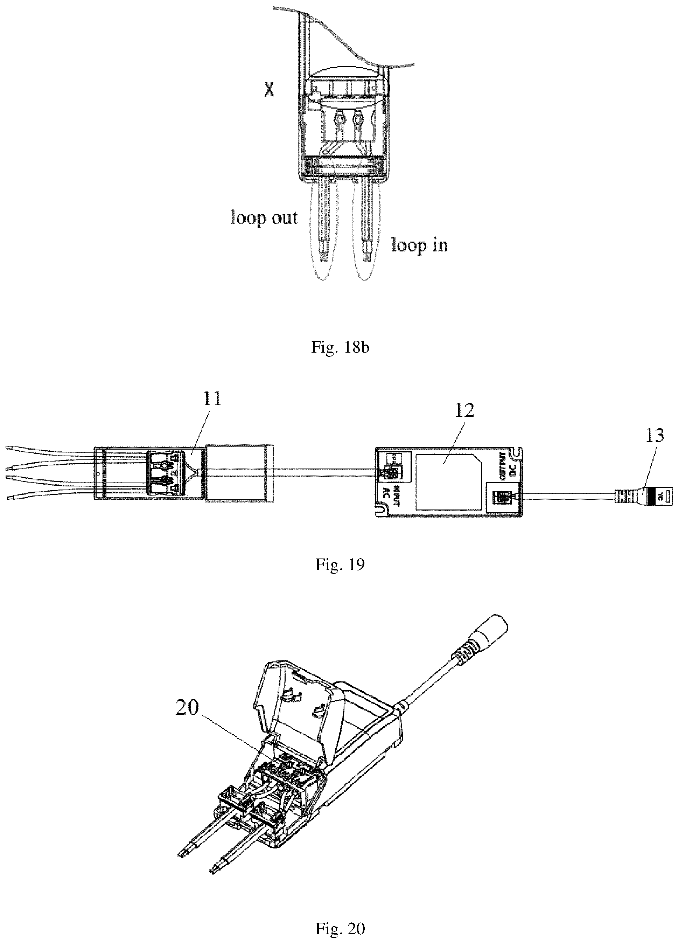

As shown in Fig. 19 and Fig. 20, a traditional driving power supply combination is composed of a junction box 11, a traditional power supply 12 and a DC head, which is equivalent to the wiring-free driving device 20 of the present invention (integrated drive capable of connecting in series). In the present invention, the traditional power supply and the junction box are integrated into a whole, so that construction and installation are realized quickly, a man-machine effect is more scientific, and a product design is more beautiful.

Technical effects of the driving device described in the present application mainly comprise the following aspects.
(1) The junction box required by a multi-machine series connection type of a traditional power supply is eliminated, and the traditional power supply and the junction box are integrated into a whole, so that construction and installation are realized quickly, a man-machine effect is more scientific, and a product design is more beautiful.
(2) The wire may be quickly fixed and multiple power supplies may be quickly connected in series through the push-type connection terminal provided by the power supply.
(3) An adhesive tape and a screw are eliminated in a whole process, and installation is convenient and fast, thus reducing a material cost and improving a working efficiency.
(4) A turning-over cover design is used in the driving power supply, which is convenient for adjusting power of the lamp at any time on a construction site.
(5) A wire clamping fastener is fixed by designing a clamping position under a power supply end cover, thus being convenient for the electrician to use at any time and saving a packaging link. Meanwhile, the wire clamping fastener may be used for fixing the input wire/output wire at the AC end separately, thus avoiding a problem of unstable fixation of the input wire/output wire under a condition of inconsistent wire diameters.
(6) A high-current 16A terminal is used to meet different wire diameter requirements in an actual installation process.

It can be understood that, for those of ordinary skills in the art, equivalent substitutions or changes may be made according to the technical solutions as defined in the claims.

## Claims

1. A wiring-free driving device comprising
a shell (210, 310), one end of the shell (210, 310) extending to form a bottom cover (260);
a driving circuit, the driving circuit being arranged inside the shell (210, 310);
a connection terminal (220), the connection terminal (220) comprising an input terminal and an output terminal, being fixedly arranged on the shell (210, 310), and being electrically connected with the driving circuit;
a top cover (230), the top cover (230) being movably connected with one end of the shell (210, 310) and being covered with the bottom cover (260) to cover the connection terminal (220);
a fixing device (240), the fixing device (240) being arranged on the top cover (230) and the bottom cover (260) and being used for fixing the top cover (230) onto the bottom cover (260) when the top cover (230) and the bottom cover (260) are covered; and
a plurality of notches for threading (250), the plurality of notches for threading (250) being used for a wire connected with the connection terminal (220) to penetrate through when the top cover (230) and the bottom cover (260) are covered;
wherein the top cover (230) is hinged with the shell (210, 310), and the top cover (230) is able to be turned over relative to the shell (210, 310);
a bayonet pedestal, the bayonet pedestal being fixedly arranged on the bottom cover (260), and comprising side walls extending upwardly at two sides, outside surfaces of the side walls being tooth-shaped surfaces, and a lower toothed plate being arranged between the side walls;
a bayonet cover body, the bayonet cover body being covered above the bayonet pedestal, and being able to move up and down along the side walls;
wherein the bayonet cover body comprises an upper toothed plate arranged opposite to the lower toothed plate and a male fastener; and the male fastener is matched with the tooth-shaped surfaces, and a distance between the bayonet cover body and the bayonet pedestal is adjusted step by step;
wherein the shell (210, 310) comprises a connecting portion and a driving portion;
the driving circuit is fixedly arranged inside the driving portion, and the connection terminal (220) is arranged on the connecting portion; **characterized in that** a baffle is arranged between different notches for threading (250), and **in that** the connecting portion and the driving portion are in fastener connection through a plug-in terminal.

2. The wiring-free driving device according to claim 1, wherein the fixing device (240) comprises
a male fastener, the male fastener being formed by extending from one end of the top cover (230); and
a female fastener, the female fastener being arranged at a tail end of the bottom cover (260) at a position corresponding to the male fastener.

3. The wiring-free driving device according to claim 1, wherein the fixing device (240) comprises
a male fastener, the male fastener being a bulge arranged on a side edge of the top cover (230); and
a female fastener, the female fastener being a step surface arranged on a side wall of the bottom cover (260) at a position corresponding to the male fastener and matched with the bulge.

4. A lamp wiring method using the wiring-free driving device according to claims 1 to 4, **characterized by** comprising:
connecting a live wire and a neutral wire of an alternating-current power supply to one input terminal of the wiring-free driving device through a connecting wire, and
connecting an output terminal of the wiring-free driving device connected with the live wire and the neutral wire to another input terminal of the wiring-free driving device.

## Patentansprüche

1. Kabelloses Antriebsgerät mit:
einer Schale (210, 310), wobei sich ein Ende der Schale (210, 310) erstreckt, um eine untere Abdeckung (260) zu bilden;
einer Antriebsschaltung, wobei die Antriebsschaltung innerhalb des Gehäuses (210, 310) angeordnet ist;
einem Verbindungsanschluss (220), wobei der Verbindungsanschluss (220) einen Eingangsanschluss und einen Ausgangsanschluss umfasst, fest am Gehäuse (210, 310) angeordnet und elektrisch mit der Treiberschaltung verbunden ist;
einer oberen Abdeckung (230), wobei die obere Abdeckung (230) beweglich mit einem Ende des Gehäuses (210, 310) verbunden und mit der unteren Abdeckung (260) abgedeckt ist, um den Verbindungsanschluss (220) abzudecken;
einer Befestigungsvorrichtung (240), wobei die Befestigungsvorrichtung (240) an der oberen Abdeckung (230) und der unteren Abdeckung (260) angeordnet ist und zur Befestigung der oberen Abdeckung (230) an der unteren Abdeckung (260) im geöffneten Zustand der Abdeckung (230) dient; die untere Abdeckung (260) ist abgedeckt;
und
einer Mehrzahl von Kerben zum Einfädeln (250), wobei die Mehrzahl von Kerben zum Einfädeln (250) dazu verwendet werden, dass ein mit dem Verbindungsanschluss (220) verbundener Draht durchdringt, wenn die obere Abdeckung (230) und die untere Abdeckung (260) geschlossen und bedeckt sind;
wobei die obere Abdeckung (230) gelenkig mit der Schale (210, 310) verbunden ist und die obere Abdeckung (230) relativ zur Schale (210, 310) umgedreht werden kann;
einem Bajonettsockel, wobei der Bajonettsockel fest auf der Bodenabdeckung (260) angeordnet ist und Seitenwände umfasst, die sich an zwei Seiten nach oben erstrecken, wobei Außenflächen der Seitenwände zahnförmige Flächen sind und eine untere Zahnplatte zwischen den Seitenwänden angeordnet ist;
einem Bajonett-Abdeckkörper, wobei der Bajonett-Abdeckkörper über dem Bajonettsockel abgedeckt ist und sich entlang der Seitenwände auf und ab bewegen kann;
wobei der Bajonett-Abdeckkörper eine obere Zahnplatte, die gegenüber der unteren Zahnplatte angeordnet ist, und ein männliches Befestigungselement umfasst; und das männliche Befestigungselement wird an die zahnförmigen Flächen angepasst, und ein Abstand zwischen dem Bajonett-Abdeckkörper und dem Bajonett-Sockel wird Schritt für Schritt angepasst;
wobei die Schale (210, 310) einen Verbindungsabschnitt und einen Antriebsabschnitt umfasst;
der Antriebsschaltung ist fest im Inneren des Antriebsabschnitts angeordnet und der Verbindungsanschluss (220) ist am Verbindungsabschnitt angeordnet; **dadurch gekennzeichnet, dass** zwischen verschiedenen Einfädelkerben (250) ein Leitblech angeordnet ist und dass der Verbindungsabschnitt und der Antriebsabschnitt über einen Steckanschluss in Befestigungsverbindung stehen.

2. Verdrahtungslose Antriebsvorrichtung nach Anspruch 1, wobei die
Befestigungsvorrichtung (240) umfasst:
männliches Befestigungselement, wobei das männliche Befestigungselement dadurch gebildet wird, dass es sich von einem Ende der oberen Abdeckung (230) erstreckt; und
ein weibliches Befestigungselement, wobei das weibliche Befestigungselement an einem hinteren Ende der unteren Abdeckung (260) an einer Position angeordnet ist, die dem männlichen Befestigungselement entspricht.

3. Verdrahtungslose Antriebsvorrichtung nach Anspruch 1, wobei die
Befestigungsvorrichtung (240) umfasst:
ein männliches Befestigungselement, wobei das männliche Befestigungselement eine an einer Seitenkante der oberen Abdeckung (230) angeordnete Ausbuchtung ist; und
ein weibliches Befestigungselement, wobei das weibliche Befestigungselement eine Stufenfläche ist, die an einer Seitenwand der Bodenabdeckung (260) an einer Position angeordnet ist, die dem männlichen Befestigungselement entspricht und mit der Ausbuchtung übereinstimmt.

4. Das Verfahren zur Lampenverdrahtung unter Verwendung der verdrahtungsfreien
Antriebsvorrichtung gemäß den Ansprüchen 1 bis 4, umfasst:
das Anschließen eines stromführenden Kabels und eines Neutralleiters einer Wechselstromversorgung an einen Eingangsanschluss des verdrahtungsfreien Antriebsgeräts über ein Verbindungskabel, und
das Verbinden eines Ausgangsanschlusses des verdrahtungsfreien Antriebsgeräts, der mit dem stromführenden Draht und dem Neutralleiter verbunden ist, mit einem anderen Eingangsanschluss des verdrahtungsfreien Antriebsgeräts.

## Revendications

1. Dispositif de conduite sans câblage comprenant
une coque (210, 310), une extrémité de la coque (210, 310) s'étendant pour former un couvercle inférieur (260) ;
un circuit de commande, le circuit de commande étant disposé à l'intérieur de la coque (210, 310) ;
une borne de connexion (220), la borne de connexion (220) comprenant une borne d'entrée et une borne de sortie, étant disposée de manière fixe sur la coque (210, 310), et étant connectée électriquement au circuit d'entraînement ;
un couvercle supérieur (230), le couvercle supérieur (230) étant relié de manière mobile à une extrémité de la coque (210, 310) et recouvert par le couvercle inférieur (260) pour couvrir la borne de connexion (220) ;
un dispositif de fixation (240), le dispositif de fixation (240) étant disposé sur le couvercle supérieur (230) et le couvercle inférieur (260) et servant à fixer le couvercle supérieur (230) sur le couvercle inférieur (260) lorsque le couvercle supérieur (230) et le couvercle inférieur (260) sont recouverts ; et
une pluralité d'encoches pour le filetage (250), la pluralité d'encoches pour le filetage (250) étant utilisée pour permettre à un câble connecté à la borne de connexion (220) de pénétrer à travers lorsque le couvercle supérieur (230) et le couvercle inférieur (260) sont couverts ;
dans lequel le couvercle supérieur (230) est articulé avec la coque (210, 310), et le couvercle supérieur (230) peut être retourné par rapport à la coque (210, 310) ;
un socle à baïonnette, le socle à baïonnette étant disposé de manière fixe sur le couvercle inférieur (260), et comprenant des parois latérales s'étendant vers le haut sur deux côtés, les surfaces extérieures des parois latérales étant des surfaces en forme de dent, et une plaque dentée inférieure étant disposée entre les côtés des parois;
un corps de couvercle à baïonnette, le corps de couvercle à baïonnette étant recouvert au-dessus du socle de baïonnette et pouvant se déplacer vers le haut et vers le bas le long des parois latérales ;
dans lequel le corps du couvercle à baïonnette comprend une plaque dentée supérieure disposée à l'opposé de la plaque dentée inférieure et une fixation mâle ; et la fixation mâle est adaptée aux surfaces en forme de dent, et une distance entre le corps du couvercle à baïonnette et le socle à baïonnette est ajustée pas à pas ;
dans laquelle la coque (210, 310) comprend une partie de connexion et une partie d'entraînement ;
le circuit d'entraînement est disposé de manière fixe à l'intérieur de la partie motrice, et la borne de connexion (220) est disposée sur la partie de connexion ; **caractérisé en ce qu'**une chicane est disposée entre différentes encoches pour le filetage (250), et **en ce que** la partie de connexion et la partie motrice sont en connexion de fixation par l'intermédiaire d'une borne d'enfichage.

2. Le dispositif de conduite sans câblage selon la revendication 1, dans lequel le dispositif de
fixation (240) comprend :
une fixation mâle, cette dernière étant formée en s'étendant à partir d'une extrémité du couvercle supérieur (230) ; et
une fixation femelle, cette dernière étant disposée à une extrémité du couvercle inférieur (260) à une position correspondant à la fixation mâle

3. Le dispositif de conduite sans câblage selon la revendication 1, dans lequel le dispositif de fixation (240) comprend :
une fixation mâle, cette dernière étant un renflement disposé sur un bord latéral du couvercle supérieur (230) ; et
une fixation femelle, cette dernière étant une surface de marche disposée sur une paroi latérale du couvercle inférieur (260) à une position correspondant à la fixation mâle et correspondant au renflement.

4. Méthode de câblage d'une lampe utilisant le dispositif de conduite sans câblage selon les revendications 1 à 4, **caractérisée par le fait qu'**elle comprend :
la connexion d'un câble sous tension et un câble neutre d'une alimentation en courant alternatif à une borne d'entrée du dispositif de conduite sans câblage par l'intermédiaire d'un câble de connexion, et
La connexion d'une borne de sortie du dispositif de conduite sans câblage reliée au câble sous tension et au câble neutre à une autre borne d'entrée du dispositif de conduite sans câblage.
